# EUROPÄISCHE PATENTSCHRIFT

(11) **EP 3 848 244 B1**
(45) Veröffentlichungstag und Bekanntmachung des Hinweises auf die Patenterteilung: **28.09.2022**
(21) Anmeldenummer: 20150941.1
(22) Anmeldetag: 09.01.2020
(51) Int. Cl.: B60P 7/15

(54) **LADEBALKEN**
LOAD BEAM
POUTRE DE CHARGEMENT

(43) Veröffentlichungstag der Anmeldung: 14.07.2021
(73) Patentinhaber: WISTRA GmbH Cargo Control, 23923 Selmsdorf (DE)
(72) Erfinder: Birenheide, Christian, 23919 Berkenthin (DE)
(74) Vertreter: Patentanwälte Vollmann Hemmer Lindfeld Partnerschaft mbB

(56) Entgegenhaltungen:
- EP-B1- 2 433 835
- WO-A1-2019/152350
- DE-A1-102016 111 756
- US-B1- 9 393 896

## Beschreibung

Die Erfindung betrifft einen Ladebalken zur Anordnung in einem Laderaum eines Fahrzeugs mit zwei einander gegenüberliegend angeordneten Halteschienen, aufweisend ein längliches Balkenelement, mindestens einen endseitig an dem Balkenelement angeordneten und zum Verschieben in den Halteschienen ausgebildeten Schuh.

Ladebalken zur Anordnung in einem Laderaum eines Fahrzeugs werden oftmals zum Bereitstellen von Zwischenlagen zum Aufsetzen von Ladung verwendet. Hierzu können sich die Ladebalken an gewünschten Positionen zwischen zwei einander gegenüberliegenden Wänden des Laderaums erstrecken und an dort angeordneten Halteschienen verriegelt werden. Dazu sind die Ladebalken mit stirnseitig angeordneten Verriegelungselementen ausgestattet. Diese können an einem Schuh angeordnet sein, der an der entsprechenden Halteschiene verschiebbar ist. Das Verriegeln kann etwa das lösbare Einrasten der Verriegelungselemente in geeigneten Formmerkmalen der Halteschiene umfassen. Da der Ladebalken überwiegend aus einem metallischen Material ausgebildet ist und weiterhin die Verriegelung hohe Lasten aufnehmen soll, führt das Einrasten, Lösen und die allgemeine Handhabung zu einer starken Geräuschentwicklung. Dies kann für Anwohner von Ladebereichen unerwünscht sein.

EP 2 433 835 B1 offenbart einen Ladebalken, der eine Lastaufnahme, einen in einer Schiene laufenden Schuh und eine Lastklinke aufweist, wobei der Schuh und die Lastaufnahme zueinander verschiebbar sind. Zur Geräuschreduktion ist ein separater Lastklinkenhebel vorgesehen, der die Lastklinke in bzw. an der Schiene fixiert. WO 2019/152350 A1 offenbart den Oberbegriff von Anspruch 1.

Aufgabe der vorliegenden Erfindung ist es, einen alternativen Ladebalken für ein Ladungssicherungssystem mit zwei einander gegenüberliegend angeordneten Halteschienen bereitzustellen, der möglichst geräuscharm zu fixieren und zu lösen ist.

Diese Aufgabe wird gemäß der Erfindung durch einen Ladebalken mit den in Anspruch 1 angegebenen Merkmalen gelöst. Vorteilhafte Ausgestaltungen des Ladebalkens ergeben sich aus den Unteransprüchen, der nachfolgenden Beschreibung und den Zeichnungen, wobei die in den Unteransprüchen und der Beschreibung angegebenen Merkmale jeweils für sich aber auch in geeigneter Kombination anwendbar sind.

Der erfindungsgemäße Ladebalken zur Anordnung in einem Laderaum eines Fahrzeugs mit zwei einander gegenüberliegend angeordneten Halteschienen weist ein längliches Balkenelement und mindestens einen endseitig an dem Balkenelement angeordneten und zum Verschieben in den Halteschienen ausgebildeten Schuh auf, wobei der Schuh und das Balkenelement relativ zueinander bewegbar sind und der Schuh eine Sperrklinke zum Verriegeln an der betreffenden Halteschiene aufweist. Erfindungsgemäß ist das Balkenelement mittels eines in dem Schuh entlang einer begrenzten Strecke verschiebbaren Rastbolzens mit dem Schuh gekoppelt, und die Sperrklinke ist an einem um eine Schwenkachse schwenkbar gelagerten Schwenkhebel angeordnet, der mit dem Rastbolzen in Flächenkontakt steht und dazu ausgebildet ist, bei Verschiebung des Rastbolzens zu verschwenken und dabei die Sperrklinke an dem Schuh in eine Verriegelungsstellung und in eine Entriegelungsstellung zu positionieren.

Die Halteschienen können an einander gegenüberliegenden Wänden angeordnet sein. Sie erstrecken sich dabei bevorzugt in vertikaler Richtung von einer Position in der Nähe eines Laderaumbodens zu einer oberen Position in der Nähe einer oberen Laderaumbegrenzung. Es ist denkbar, dass in einem Laderaum mehrere Paare einander gegenüberliegender Halteschienen vorgesehen sind, die jeweils einen oder mehrere Ladebalken aufnehmen können. Die Halteschienen können einen sich entlang ihrer Längserstreckung verlaufenden Hohlraum einschließen. Sie weisen zudem eine Führung zum Führen des Schuhs auf. Dieses könnte etwa durch einen Schlitz in einer in das Innere des Laderaums gewandten Fläche der Halteschiene realisiert sein, der entlang der Längserstreckung verläuft. In diesen kann ein Führungselement des Schuhs eingesetzt und geführt werden. Der Schlitz kann weiterhin von mehreren Öffnungen durchsetzt sein, die breiter sind als der Schlitz und die entlang der Längserstreckung verteilt sind. Die Öffnungen erlauben das Aufnehmen der Sperrklinke zum Verriegeln des Schuhs und damit der betreffenden Seite des Ladebalkens. Derartige Halteschienen werden oftmals als "Airline-Schiene" bezeichnet und können Fußboden- oder Sitzschienen entsprechen, die in Flugzeugkabinen verwendet werden. Die Form der Öffnungen ist für den Gegenstand der Erfindung unerheblich. Neben kreisrunden können auch eckige, ovale, durchgehende oder einen Steg aufweisende Öffnungen eingesetzt werden.

Das längliche Balkenelement bestimmt die eigentliche Form des Ladebalkens. Das Balkenelement kann ein Hohlprofil aufweisen, das eine für den Anwendungszweck geeignete Lastaufnahme ermöglicht. Beispielhaft kann es ein rechteckiges Hohlprofil aufweisen. Das Balkenelement könnte teleskopierbar sein, so dass es unter anderem für verschiedene Breiten von Laderäumen einsetzbar ist.

Der Schuh ist komplementär zu der Halteschiene geformt. Es ist vorteilhaft, wenn der Schuh eine Auflagefläche aufweist, die an die in den Laderaum gewandte Fläche der Halteschiene angepasst ist. Das vorangehend genannte Führungselement kann von der Auflagefläche abstehen. Weiterhin kann es dazu ausgebildet sein, in dem Hohlraum der Schiene zu verlaufen und einen gleitenden formschlüssigen Kontakt mit der Führung der Halteschiene einzugehen. Dadurch kann das Führungselement von der Halteschiene nicht entfernt, sondern lediglich entlang der Längserstreckung der Halteschiene verschoben werden. Das Führungselement könnte einen flachen, quaderförmigen Abschnitt aufweisen, der in dem vorangehend genannten Schlitz verläuft. Seitliche Vorsprünge könnten das Führungselement in der Halteschiene halten, indem sie im Hohlraum beidseitig des Schlitzes angeordnet sind.

Das Balkenelement ist mittels eines Rastbolzens mit dem Schuh gekoppelt. Bevorzugt sind zwei Schuhe an einander entgegengesetzten Enden des Balkenelements vorgesehen, die jeweils endseitig mit einem Rastbolzen mit dem Balkenelement gekoppelt sind. Der Rastbolzen kann dabei um eine begrenzte Strecke verschoben werden, so dass das Balkenelement ebenso um diese Strecke bewegbar ist. Ein Benutzer kann durch manuelle Einwirkung auf das Balkenelement dieses relativ zu dem betreffenden Schuh bewegen. Durch den Schwenkhebel, an dem die jeweilige Sperrklinke angeordnet ist, kann durch Bewegen des Rastbolzens eine Betätigung der Sperrklinke erfolgen. Der Rastbolzen steht dabei in einem Flächenkontakt mit dem Schwenkhebel, so dass eine Bewegung des Rastbolzens unmittelbar in eine von der Formgebung des Schwenkhebels abhängige Bewegung der Sperrklinke umgesetzt wird. Die Sperrklinke kann dabei eine Verriegelungsstellung einnehmen, in der die Sperrklinke mit der betreffenden Halteschiene in Eingriff ist. In dieser Stellung ist der Schuh an der Halteschiene fixiert, so dass er nicht mehr entlang der Halteschiene verschoben werden kann. Die entsprechende Seite des Ladebalkens ist folglich verriegelt. In einer Entriegelungsstellung ist indes die Sperrklinke gelöst und der Schuh lässt sich verschieben. Die entsprechende Seite des Ladebalkens ist folglich entriegelt.

Ein Grundgedanke der vorliegenden Erfindung liegt darin, dass der Ladebalken eine mechanisch einfache Kopplung zwischen einer Bewegung eines Balkenelements und einer Sperrklinke aufweist, was eine sehr einfache Verriegelung und Entriegelung ermöglicht. Der Ladebalken erlaubt demnach das Zurückziehen der Sperrklinke bei einer entsprechenden Bewegung des Balkenelements. Da der Ladebalken mit einer aufzunehmenden Last vertikal nach unten in Richtung des Laderaumbodens belastet werden soll, bietet es sich an, die Kopplung zwischen dem Balkenelement und der Sperrklinke so auszuführen, dass das Balkenelement vertikal nach oben geschoben werden muss, um die entsprechende Sperrklinke aus der Halteschiene zu lösen. Beim Hochschieben des Balkenelements an einem Schuh wird die betreffende Sperrklinke zurückgezogen, so dass der Schuh anschließend praktisch geräuschlos in der Halteschiene verschoben werden kann. Durch eine anschließende Belastung des Balkenelements kann eine entgegengesetzte Wirkung erreicht werden, bei der der Rastbolzen und der Schwenkhebel entgegengesetzt bewegt werden und damit zu einer Verriegelung führen. Damit wird insgesamt die Geräuschbelastung deutlich reduziert. Durch den einfachen Aufbau ist weiterhin kein Seilzug oder ein anderes kraftübertragendes Element zwischen den Sperrklinken beider Enden des Ladebalkens notwendig, sondern jedes Ende kann für sich entsprechend bedient werden. Ist das Balkenelement teleskopierbar, können beide Enden nacheinander bedient und die Schuhe beider Enden nacheinander verschoben werden, da das Balkenelement die kurzzeitige Schräglage durch ihre veränderbare Länge ausgleichen kann.

Es ist besonders vorteilhaft, wenn der Schuh mindestens ein Langloch aufweist, durch das sich der Rastbolzen erstreckt und in dem der Rastbolzen verschiebbar ist. Das Langloch kann bevorzugt eine geradlinige Erstreckung aufweisen. Seine Endkonturen können komplementär zu den Rastbolzen ausgeformt sein, sodass sich dieser bündig in die Endkonturen des Langlochs schmiegen kann. Durch das Langloch wird die Strecke begrenzt, entlang der der Rastbolzen verschiebbar ist. Besonders bevorzugt erstreckt sich das Langloch parallel zu dem vorangehend erwähnten Führungselement oder der Halteschiene im eingebauten Zustand. Je nach Ausbildung des Schwenkhebels und des Schuhs kann jedoch auch eine hiervon abweichende Formgebung des Langlochs resultieren.

Bevorzugt ist der Schwenkhebel zumindest abschnittsweise wippenförmig ausgebildet. Der Schwenkhebel kann folglich eine Schwenkachse aufweisen, die ungefähr mittig zwischen der Sperrklinke und einem entgegengesetzten Ende des Schwenkhebels angeordnet ist. Wird dieses Ende bei in der Halteschiene eingesetztem Schuh in Richtung der Halteschiene bewegt, entfernt sich die Sperrklinke von der Halteschiene und umgekehrt. Der Schwenkhebel kann geradlinig ausgeführt sein. Allerdings kann der Schwenkhebel auch geknickt oder gebogen sein, insbesondere im Bereich seiner Schwenkachse.

Es ist vorteilhaft, wenn die Schwenkachse zwischen der Sperrklinke und dem Langloch angeordnet ist. Der Schwenkhebel ist damit derart positioniert, dass eine Bewegung des Rastbolzens stets zu einer entgegengesetzten Bewegung der Sperrklinke führt.

Besonders bevorzugt ist die Sperrklinke starr an dem Schwenkhebel angeordnet und zu einer von dem Balkenelement abgewandten Seite des Schuhs gerichtet. Die Sperrklinke kann insbesondere im Bereich eines Endes des Schwenkhebels angeordnet sein, um dadurch eine signifikante Bewegung durchzuführen, die die Länge der oben genannten begrenzten Strecke überschreitet. Des Weiteren ist eine momentane Position der Sperrklinke bei Anordnung der Sperrklinke an einem Ende des Schwenkhebels sehr gut sichtbar. Der Schwenkhebel und die Sperrklinke können in Form eines einzelnen, integralen Bauteils ausgebildet sein.

Die Sperrklinke oder ein der Sperrklinke benachbarter Bereich des Schwenkhebels weist eine nach außen ragende starre Lasche zum manuellen Betätigen der Sperrklinke auf. Der benachbarte Bereich kann etwa das vorangehend genannte Ende des Schwenkhebels umfassen. Durch die starre Lasche kann ein Benutzer die Sperrklinke auch manuell von der Verriegelungsstellung lösen, falls gewünscht. Dadurch kann die Sperrklinke auch aus einer eventuell festgeklemmten Position gelöst werden, falls sich diese aus einer hohen Belastung oder einer unsachgemäßen Verwendung ergeben sollte.

Besonders bevorzugt ragt die Lasche stets über eine Außenfläche des Schuhs. Damit kann stets die Position der Sperrklinke und damit der Zustand einer Verriegelung an der Halteschiene erkannt werden. Zudem ist die Lasche in jeder Position der Sperrklinke betätigbar.

In einer besonders vorteilhaften Ausführungsform weist der Schwenkhebel einen ersten Abschnitt und einen zweiten Abschnitt auf, die die Schwenkachse einschließen, wobei die Sperrklinke an dem ersten Abschnitt angeordnet ist, und wobei ein Federelement mit dem zweiten Abschnitt gekoppelt ist und dazu ausgebildet ist, den Schwenkhebel zum Platzieren der Sperrklinke in die Verriegelungsstellung zu schwenken. Bei einer Belastung des Balkenelements kann sich der Rastbolzen an dem zweiten Abschnitt in Richtung der Schwenkachse bewegen. Die Schwenkachse liegt damit direkt in einer Schnittfläche zwischen beiden Abschnitten. Um sicherzustellen, dass die Sperrklinke der Bewegung des Rastbolzens in beide Richtungen folgt und zuverlässig die Verriegelungsstellung einnimmt, ist das Federelement sehr sinnvoll. Ein versehentliches Verbleiben in der Entriegelungsstellung kann verhindert werden.

Es ist vorteilhaft, wenn der erste Abschnitt und der zweite Abschnitt auf einer zu dem Balkenelement weisenden Seite einen Winkel von unter 180° einschließen. Der Schwenkhebel ist folglich auf seiner mit dem Rastbolzen in Flächenkontakt bringbaren Seite zu dem Balkenelement hin geknickt, wobei die Stärke des Knicks die Bewegung der Sperrklinke bestimmt. Es ist vorstellbar, dass der genannte Winkel in einem Bereich von 140° bis 170° liegt. In einer besonders vorteilhaften Ausführungsform liegt der Winkel in einem Bereich von 150° bis 160°.

In einer vorteilhaften Ausführungsform weist der Schuh zwei voneinander beabstandete Haltewände auf, zwischen denen der Schwenkhebel schwenkbar gelagert ist. Der Schuh ist folglich wie ein Gabelkopf aufgebaut. Die Krafteinleitung auf die Sperrklinke sowie den Schwenkhebel ist somit symmetrisch und die Gefahr eines Festklemmens kann deutlich reduziert werden.

Bevorzugt weist dann das Balkenelement zwei voneinander beabstandete Flansche auf, die die Haltewände umgeben, wobei sich der Rastbolzen durch die Haltewände und die Flansche erstreckt. Das Balkenelement ist folglich ebenso wie ein Gabelkopf ausgeführt. Es kann symmetrisch an dem Schuh angeordnet und der Rastbolzen wird durch die beabstandeten Flansche präzise geführt werden. Es bietet sich an, dass beide Haltewände des Schuhs jeweils ein Langloch aufweisen. Beide Langlöcher sind gleich ausgeformt und ausgerichtet. Der Rastbolzen erstreckt sich durch beide Langlöcher und gerät zwischen den Haltewänden in Flächenkontakt mit dem Schwenkhebel. Durch diesen Aufbau kann das Verdrehen oder Festklemmen sämtlicher Elemente weitgehend verhindert werden. Gleichzeitig ist die Lagerung des Rastbolzens und damit des Balkenelements an dem Schuh sehr stabil.

Weiter bevorzugt ist eine Bremseinheit an dem Schuh angeordnet, die eine Reibungskraft zwischen dem Schuh und der Halteschiene erzeugt, um ein Verrutschen des Schuhs bei in Entriegelungsstellung befindlicher Sperrklinke zu verhindern. Weist der Ladebalken zwei Schuhe auf, die nacheinander gelöst und verschoben werden sollen, kann ein Verrutschen der Schuhe bei gelöster Sperrklinke verhindert werden. Damit wird zusätzlich die Geräuschentwicklung reduziert, da ein versehentliches Aufprallen des Ladebalkens an eine untere Begrenzung der Halteschiene oder des Laderaumbodens verhindert wird. Die Bremseinheit könnte in Form eines elastisch gelagerten, einen ausreichenden Haftreibungskoeffizienten aufweisenden Elements erreicht werden, der sich zwischen dem Schuh und der Halteschiene befindet. Der Haftreibungskoeffizient sollte zumindest dafür ausreichen, den Ladebalken in unbelastetem Zustand sicher zu halten. Der Ladebalken muss sich jedoch leicht von Hand bewegen lassen.

Die Erfindung ist nachfolgend anhand eines in der Zeichnung dargestellten Ausführungsbeispiels näher erläutert. Es zeigen:

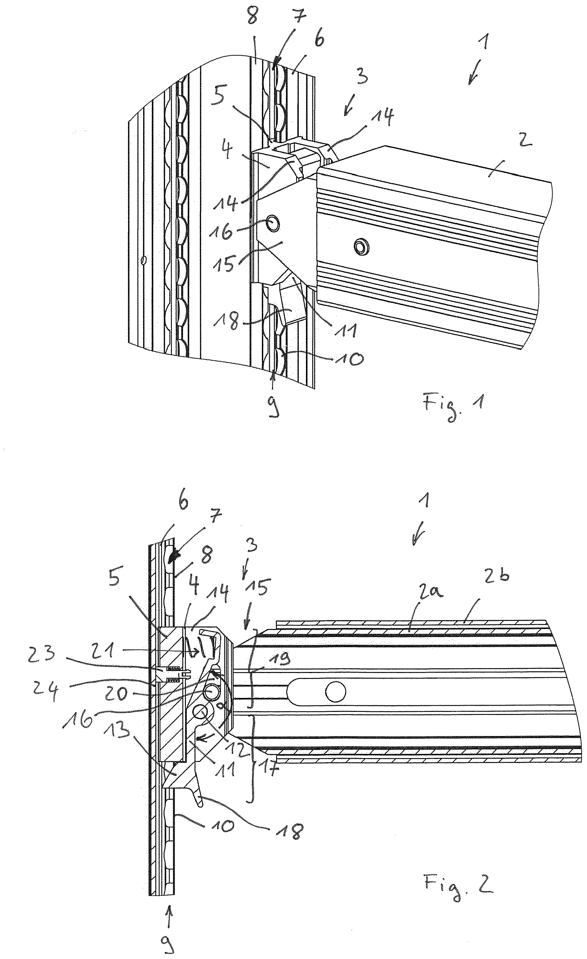

- Fig. 1 bis 6: zeigen den Ladebalken mit einer Sperrklinke in unterschiedlichen Stellungen in jeweils einer dreidimensionalen Ansicht und einem Schnitt.

In Fig. 1 und 2 wird ein Teil eines Ladebalkens 1 zur Anordnung in einem Laderaum eines Fahrzeugs gezeigt. Der Ladebalken 1 weist ein Balkenelement 2 auf, das zum Aufnehmen einer Last ausgelegt ist. Es weist beispielhaft zwei ineinander verschiebbare, rechteckige Hohlprofile 2a und 2b auf, die ein Teleskopieren des Ladebalkens erlauben. Damit können unterschiedliche breite Laderäume berücksichtigt werden. Das Teleskopieren erlaubt weiterhin auch eine Schrägstellung des Ladebalkens 1, wenn etwa zwei Enden 3 des Ladebalkens 1 nacheinander in ihrer vertikalen Position angepasst werden.

Der Ladebalken 1 besitzt zumindest an einem, jedoch bevorzugt an beiden Enden 3 einen Schuh 4. Der Schuh 4 weist ein Führungselement 5 auf, das an einer vom Balkenelement 2 abgewandten Seite des Schuhs 4 angeordnet ist. Das Führungselement 5 weist beispielhaft eine flache Quaderform auf. Es ist dazu ausgebildet, in einer Halteschiene 6 verschiebbar geführt zu werden.

Die Halteschiene 6 ist in einem Laderaum des Fahrzeugs (hier nicht gezeigt) angeordnet und erstreckt sich in vertikaler Richtung. Bevorzugt sind in dem Laderaum Paare von einander gegenüberliegenden Halteschienen 6 gebildet, zwischen denen sich Ladebalken 1 erstrecken. Die Halteschiene 6 kann einen Hohlraum 7 umfassen, in dem das Führungselement 5 platziert ist. Der Hohlraum 7 wird durch eine in den Laderaum zeigende Fläche 8 begrenzt. Diese weist in der gezeigten Darstellung beispielhaft einen länglichen Schlitz 9 als Führung auf, der von voneinander beabstandeten Öffnungen 10 durchsetzt ist. Das Führungselement 5 erstreckt sich durch den Schlitz 9 nach außen und wird durch diesen geführt.

Der Schuh 4 weist einen Schwenkhebel 11 auf, der um eine Schwenkachse 12 herum schwenkbar an dem Schuh 4 gelagert ist. An dem Schwenkhebel 11 ist eine Sperrklinke 13 angeordnet, die in eine der Öffnungen 10 der Halteschiene 6 eintauchen kann, um dadurch eine Verriegelung des Schuhs 4 an der Halteschiene 6 zu erreichen.

Der Schuh 4 weist indes zwei voneinander beabstandete Haltewände 14 auf, zwischen denen der Schwenkhebel 11 angeordnet ist. Die Schwenkachse 12 kann in einem rechten Winkel zu den Haltewänden 14 verlaufen. Das Balkenelement 2 weist zwei voneinander beabstandete Flansche 15 auf, die von außen an die Seitenwände 14 anschließen. Es ist vorstellbar, dass die Flansche 15 an dem inneren Hohlprofil 2a ausgeformt sind. Ein Rastbolzen 16 erstreckt sich durch die Flansche 15 und die Seitenwände 14 und koppelt dadurch das Balkenelement 2 und den Schuh 4 miteinander. Weitere Details zu dem Aufbau können der Schnittdarstellung aus Fig. 2 entnommen werden.

In Fig. 2 wird neben angrenzenden Komponenten der Schwenkhebel 11 in einer Schnittdarstellung gezeigt. Der Schwenkhebel 11 weist beispielhaft einen ersten Abschnitt 17 auf, an dem sich die Sperrklinke 13 befindet. Zusätzlich dazu ist eine starre Lasche 18 vorgesehen, die sich von der Sperrklinke 13 bzw. dem Schwenkhebel 11 nach außen erstreckt. Die Sperrklinke 13 befindet sich hier in einer Verriegelungsstellung und ist dabei vollständig in eine der Öffnungen 10 eingeführt. Zwischen der Halteschiene 6 und einer zu der Halteschiene 6 gewandten Fläche der Lasche 18 befindet sich ein ausreichender Abstand, um mit einem Finger, einer Stange oder einem anderen Werkzeug den Schwenkhebel 11 und damit die Sperrklinke 13 mittels der Lasche 18 aus der Verriegelungsstellung zu lösen. Der Schwenkhebel 11 ist beispielhaft als ein einzelnes, integrales Bauteil mit daran angeformter Sperrklinke und Lasche 18 ausgebildet.

Der Schwenkhebel 11 weist ferner einen zweiten Abschnitt 19 auf. Zwischen dem ersten Abschnitt 17 und dem zweiten Abschnitt 19 ist die Schwenkachse 12 eingeschlossen. Der erste Abschnitt 17 und der zweite Abschnitt 19 schließen überdies auf einer zu dem Balkenelement 2 gewandten Seite einen Winkel a ein, der in einem Bereich von 140°-170° liegen kann, bevorzugt in einem Bereich von 150° bis 160°. Beispielhaft beträgt der Winkel a hier ungefähr 155°.

In dieser Schnittdarstellung ist lediglich eine der Haltewände 14 zu sehen. Diese weist ein Langloch 20 auf, durch die sich der Rastbolzen 16 erstreckt. Der Rastbolzen 16 ist mit den Flanschen 15 verbunden und kann innerhalb des Langlochs 20 verschoben werden. Die Breite des Langlochs 20 ist an den Durchmesser des Rastbolzens 16 angepasst. Die Länge des Langlochs 20 bestimmt die mögliche Verschiebestrecke des Rastbolzens 16. Es versteht sich, dass beide Haltewände 14 korrespondierend geformte Langlöcher 20 besitzen, durch die sich der Rastbolzen 16 erstreckt.

Der Rastbolzen 16 steht in einem Flächenkontakt mit dem zweiten Abschnitt 19 des Schwenkhebels 11. Dabei befindet sich die Schwenkachse 12 in einem zwischen der Sperrklinke 13 und dem Rastbolzen 16 liegenden Bereich. An einer von der Sperrklinke 13 abgewandten Seite des Schwenkhebels 11 ist ein Federelement 21 angeordnet und exemplarisch als Schraubenfeder ausgebildet. Der Schwenkhebel 11 weist zur Aufnahme des Federelements 21 eine Vertiefung auf, in die das Federelement 21 eingesetzt ist und damit in Position gehalten wird. Das Federelement 21 ist dazu vorgesehen, den Schwenkhebel 11 und damit die Sperrklinke 13 stets in die Verriegelungsstellung zu drängen. Der Rastbolzen 16 kann entgegen der Federkraft des Federelements 21 den zweiten Abschnitt 19 des Schwenkhebels 11 in Richtung der Halteschiene 6 drängen, wenn der Rastbolzen 16 durch das Balkenelement 2 vertikal nach oben bewegt wird. Aufgrund des Winkels a zwischen den beiden Abschnitten 17 und 19 des Schwenkhebels 11 weicht der Schwenkhebel 11 folglich der Bewegung des Rastbolzens 16 aus, sodass das Federelement 21 komprimiert wird und die Sperrklinke 13 gleichzeitig aus der betreffenden Öffnung 10 gezogen wird. Dadurch wird der Ladebalken 1 auf der betreffenden Seite entriegelt. Aufgrund des sanften Lösens der Sperrklinke 13 aus der entsprechenden Öffnung 10 ist die Geräuschentwicklung des Ladebalkens 1 beim Lösen und Verriegeln minimal. Aufgrund der Federkraft des Federelements 21 erfolgt bei entgegengesetzter Bewegung des Balkenelements 2 das Einnehmen der Verriegelungsstellung durch die Sperrklinke 13.

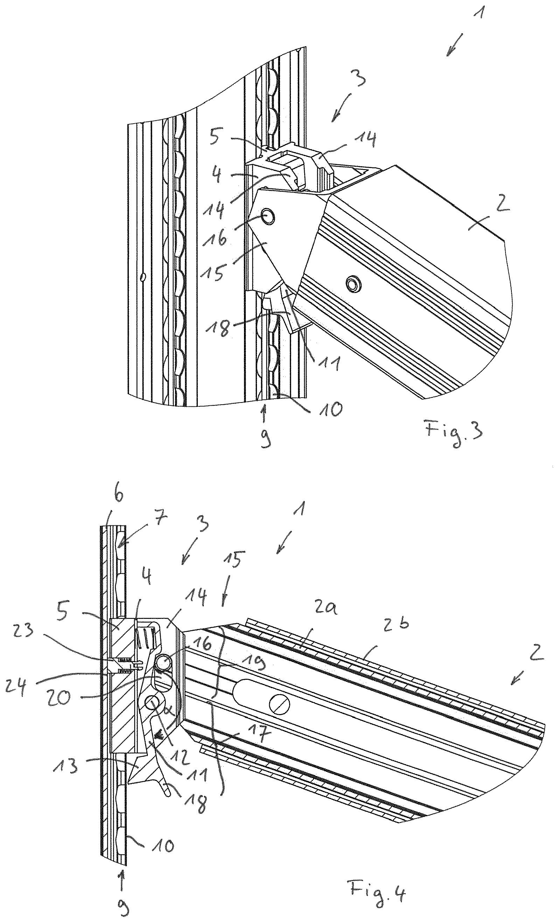

In Fig. 3 und 4 wird eine Entriegelungsstellung gezeigt, wobei das Balkenelement 2 hier schräg an dem Schuh 4 anliegt. Der Schwenkhebel 11 liegt mit seinem zweiten Abschnitt 19 auf einer Innenfläche 22 des Schuhs 4 auf, sodass das Federelement 21 zusammengedrückt ist und die Sperrklinke 13 aus der Öffnung 10 gezogen ist. Das Führungselement 4 kann folglich frei innerhalb der Halteschiene 6 bewegt werden.

Eine derart schräg gestellte Anordnung könnte sich etwa dann ergeben, wenn das Balkenelement 2 teleskopierbar ist und beide Enden 3 des Ladebalkens 1 nacheinander in einander gegenüberliegenden Halteschienen 6 verschoben werden. In Fig. 3 und 4 ist davon auszugehen, dass das Balkenelement 2 an dem gezeigten Ende 3 von einem Benutzer in der Zeichnungsebene nach oben gedrückt wird, sodass der Rastbolzen 16 den zweiten Abschnitt 19 des Schwenkhebels 11 verdrängt und dadurch die Sperrklinke 13 bewegt.

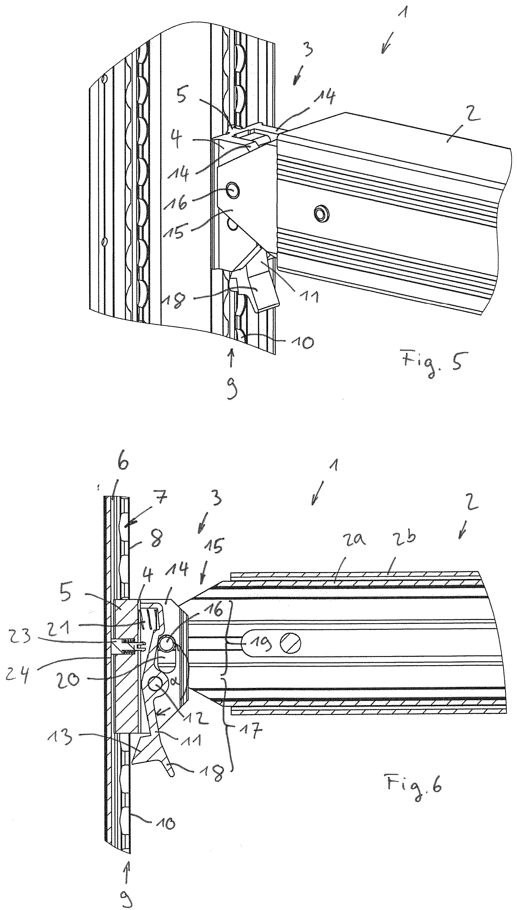

In Fig. 5 und 6 ist das Balkenelement 2 wieder in der Waagerechten ausgerichtet. Durch eine Belastung des Ladebalkens 1 würde der Rastbolzen 16 in der Zeichnungsebene nach unten gedrückt werden, um durch die Federkraft des Federelements 21 den Schwenkhebel 11 zurückschwenken zu lassen. Dann taucht die Sperrklinke 13 wieder in eine der Öffnungen 10 ein und der Ladebalken 1 ist verriegelt, wie in Fig. 1 und 2 gezeigt.

Um beim Verstellen des Ladebalkens 1 ein versehentliches Verrutschen zu vermeiden, bevor die entsprechenden Sperrklinken 13 wieder in eine der Öffnungen 10 eingerastet sind, ist eine Bremseinheit 23 vorgesehen. Diese könnte einen federnd gelagerten Stift oder ein ähnliches Element aufweisen, welches von dem Schuh 4, beispielsweise aus dem Führungselement 5 heraus, gegen eine Innenfläche 24 der Halteschiene 6 drückt. Hierdurch wird eine zum temporären Halten des Ladebalkens 1 ausreichende Reibungskraft erzeugt. Der Ladebalken 1 wird folglich zumindest locker in seiner momentanen Position gehalten, bis er anschließend wieder verriegelt wird.

### Bezugszeichenliste

- 1: Ladebalken
- 2: Balkenelement
- 2a, 2b: Hohlprofil
- 3: Ende
- 4: Schuh
- 5: Führungselement
- 6: Halteschiene
- 7: Hohlraum
- 8: Fläche
- 9: Schlitz
- 10: Öffnung
- 11: Schwenkhebel
- 12: Schwenkachse
- 13: Sperrklinke
- 14: Haltewand
- 15: Flansch
- 16: Rastbolzen
- 17: erster Abschnitt
- 18: Lasche
- 19: zweiter Abschnitt
- 20: Langloch
- 21: Federelement
- 22: Innenfläche
- 23: Bremseinheit
- 24: Innenfläche

- a: Winkel

## Patentansprüche

1. Ladebalken (1) zur Anordnung in einem Laderaum eines Fahrzeugs mit zwei einander gegenüberliegend angeordneten Halteschienen (6), aufweisend ein längliches Balkenelement (2), mindestens einen endseitig an dem Balkenelement (2) angeordneten und zum Verschieben in den Halteschienen (6) ausgebildeten Schuh (4), wobei der Schuh (4) und das Balkenelement (2) relativ zueinander bewegbar sind und der Schuh (4) eine Sperrklinke (13) zum Verriegeln an der betreffenden Halteschiene (6) aufweist, wobei das Balkenelement (2) mittels eines in dem Schuh (4) entlang einer begrenzten Strecke verschiebbaren Rastbolzens (16) mit dem Schuh (4) gekoppelt ist, und dass die Sperrklinke (13) an einem um eine Schwenkachse (12) schwenkbar gelagerten Schwenkhebel (11) angeordnet ist, **dadurch gekennzeichnet, dass** der Schwenkhebel mit dem Rastbolzen (16) in Flächenkontakt steht und dazu ausgebildet ist, bei Verschiebung des Rastbolzens (16) zu verschwenken und dabei die Sperrklinke (13) an dem Schuh (4) in eine Verriegelungsstellung und in eine Entriegelungsstellung zu positionieren.

2. Ladebalken (1) nach Anspruch 1, **dadurch gekennzeichnet, dass** der Schuh (4) mindestens ein Langloch (20) aufweist, durch das sich der Rastbolzen (16) erstreckt und in dem der Rastbolzen (16) verschiebbar ist.

3. Ladebalken (1) nach Anspruch 1 oder 2, **dadurch gekennzeichnet, dass** der Schwenkhebel (11) zumindest abschnittsweise wippenförmig ausgebildet ist.

4. Ladebalken (1) nach einem der vorhergehenden Ansprüche, **dadurch gekennzeichnet, dass** die Schwenkachse (12) zwischen der Sperrklinke (13) und dem Langloch (20) angeordnet ist.

5. Ladebalken (1) nach einem der vorhergehenden Ansprüche, **dadurch gekennzeichnet, dass** die Sperrklinke (13) starr an dem Schwenkhebel (11) angeordnet und zu einer von dem Balkenelement (2) abgewandten Seite des Schuhs (4) gerichtet ist.

6. Ladebalken (1) nach einem der vorhergehenden Ansprüche, **dadurch gekennzeichnet, dass** die Sperrklinke (13) oder ein der Sperrklinke (13) benachbarter Bereich des Schwenkhebels (11) eine nach außen ragende starre Lasche (18) zum manuellen Betätigen der Sperrklinke (13) aufweist.

7. Ladebalken (1) nach Anspruch 6, **dadurch gekennzeichnet, dass** die Lasche (18) stets über eine Außenfläche des Schuhs (4) ragt.

8. Ladebalken (1) nach einem der vorhergehenden Ansprüche, **dadurch gekennzeichnet, dass** der Schwenkhebel (11) einen ersten Abschnitt (17) und einen zweiten Abschnitt (19) aufweist, die die Schwenkachse (12) einschließen, wobei die Sperrklinke (13) an dem ersten Abschnitt (17) angeordnet ist, und wobei ein Federelement (21) mit dem zweiten Abschnitt (19) gekoppelt ist und dazu ausgebildet ist, den Schwenkhebel (11) zum Platzieren der Sperrklinke (13) in die Verriegelungsstellung zu schwenken.

9. Ladebalken (1) nach Anspruch 8, **dadurch gekennzeichnet, dass** der erste Abschnitt (17) und der zweite Abschnitt (19) auf einer zu dem Balkenelement (2) weisenden Seite einen Winkel von unter 180° einschließen.

10. Ladebalken (1) nach einem der vorhergehenden Ansprüche, **dadurch gekennzeichnet, dass** der Schuh zwei voneinander beabstandete Haltewände (14) aufweist, zwischen denen der Schwenkhebel (11) schwenkbar gelagert ist.

11. Ladebalken (1) nach Anspruch 10, **dadurch gekennzeichnet, dass** das Balkenelement (2) zwei voneinander beabstandete Flansche (15) aufweist, die die Haltewände (14) umgeben, wobei sich der Rastbolzen (16) durch die Haltewände (14) und die Flansche (15) erstreckt.

12. Ladebalken (1) nach einem der vorhergehenden Ansprüche, **dadurch gekennzeichnet, dass** eine Bremseinheit (23) an dem Schuh (4) angeordnet ist, die eine Reibungskraft zwischen dem Schuh (4) und der Halteschiene (6) erzeugt, um ein Verrutschen des Schuhs (4) bei in Entriegelungsstellung befindlicher Sperrklinke (13) zu verhindern.

## Claims

1. A load beam (1) for arrangement in a cargo space of a vehicle, with two holding rails (6) arranged opposite one another, having an elongate beam element (2), at least one shoe (4) arranged at the end of the beam element (2) and designed for displacement in the holding rails (6), wherein the shoe (4) and the beam element (2) are movable relative to one another and the shoe (4) has a pawl (13) for locking on the respective holding rail (6), wherein the beam element (2) is coupled to the shoe (4) by means of a locking bolt (16) which can be displaced in the shoe (4) along a limited distance and the pawl (13) is arranged on a pivot lever (11) which is mounted to be pivotable about a pivot axis (12),
**characterized in that** the pivot lever is in surface contact with the locking bolt (16) and is designed to pivot when the locking bolt (16) is displaced and thereby to position the pawl (13) on the shoe (4) in a locking position and in an unlocking position.

2. The load beam (1) according to claim 1, **characterized in that** the shoe (4) has at least one elongated hole (20) through which the locking bolt (16) extends and in which the locking bolt (16) can be displaced.

3. The load beam (1) according to claim 1 or 2, **characterized in that** the pivot lever (11) is formed in a rocker-shaped manner, at least in certain sections.

4. The load beam (1) according to any one of the preceding claims, **characterized in that** the pivot axis (12) is arranged between the pawl (13) and the elongated hole (20).

5. The load beam (1) according to any one of the preceding claims, **characterized in that** the pawl (13) is rigidly arranged on the pivot lever (11) and is directed towards a side of the shoe (4) facing away from the beam element (2).

6. The load beam (1) according to any one of the preceding claims, **characterized in that** the pawl (13) or a region of the pivot lever (11) adjacent to the pawl (13) has an outwardly projecting rigid tab (18) for manual actuation of the pawl (13).

7. The load beam (1) according to claim 6, **characterized in that** the tab (18) always projects beyond an outer surface of the shoe (4).

8. The load beam (1) according to any one of the preceding claims, **characterized in that** the pivot lever (11) has a first section (17) and a second section (19) which enclose the pivot axis (12), wherein the pawl (13) is arranged at the first section (17) and wherein a spring element (21) is coupled to the second section (19) and is designed to pivot the pivot lever (11) for placing the pawl (13) in the locking position.

9. The load beam (1) according to claim 8, **characterized in that** the first section (17) and the second section (19) enclose an angle of less than 180° on a side facing towards the beam element (2).

10. The load beam (1) according to any one of the preceding claims, **characterized in that** the shoe has two spaced-apart retaining walls (14) between which the pivot lever (11) is pivotably mounted.

11. The load beam (1) according to claim 10, **characterized in that** the beam element (2) has two spaced-apart flanges (15) surrounding the retaining walls (14), wherein the locking bolt (16) extends through the retaining walls (14) and the flanges (15).

12. The load beam (1) according to any one of the preceding claims, **characterized in that** a brake unit (23) is arranged on the shoe (4), which brake unit generates a frictional force between the shoe (4) and the holding rail (6) to prevent the shoe (4) from slipping when the pawl (13) is in the unlocked position.

## Revendications

1. Poutre de chargement (1) destinée à être disposée dans un espace de chargement d'un véhicule avec deux rails de support (6) disposés en regard l'un de l'autre, comprenant un élément de poutre (2) allongé, au moins un patin (4) disposé du côté extrémité sur l'élément de poutre (2) et configuré pour un déplacement dans les rails de support (6), le patin (4) et l'élément de poutre (2) étant déplaçables l'un par rapport à l'autre et le patin (4) comprenant un pêne de blocage (13) pour le verrouillage au rail de support (6) correspondant, l'élément de poutre (2) étant relié au patin (4) moyennant un boulon d'arrêt (16) déplaçable dans le patin le long d'un trajet limité et le pêne de blocage (13) étant disposé pivotant sur un levier de pivotement (11) monté pivotant autour d'un axe de pivotement (12),
**caractérisée en ce que** le levier de pivotement est en contact de surface avec le boulon d'arrêt (16) et **en ce qu'**il est configuré pour pivoter lors d'un déplacement du boulon d'arrêt (16) et pour positionner alors le pêne de blocage (13) sur le patin (4) dans une position de verrouillage et dans une position de déverrouillage.

2. Poutre de chargement (1) selon la revendication 1, **caractérisée en ce que** le patin (4) comprend au moins une ouverture allongée (20) à travers laquelle s'étend le boulon d'arrêt (16) et dans laquelle le boulon d'arrêt (16) est déplaçable.

3. Poutre de chargement (1) selon la revendication 1 ou 2, **caractérisée en ce que** le levier de pivotement (11) a, au moins par section, la forme d'une balancelle.

4. Poutre de chargement (1) selon l'une des revendications précédentes, **caractérisée en ce que** l'axe de pivotement (12) est disposé entre le pêne de blocage (13) et l'ouverture allongée (20).

5. Poutre de chargement (1) selon l'une des revendications précédentes, **caractérisée en ce que** le pêne de blocage (13) est disposé de façon fixe au levier de pivotement (11) et est orienté vers un côté du patin (4) qui est opposé à l'élément de poutre (2).

6. Poutre de chargement (1) selon l'une des revendications précédentes, **caractérisée en ce que** le pêne de blocage (13) ou une zone du levier de pivotement (11), voisine du pêne de blocage (13), comprend une languette (18) rigide s'étendant vers l'extérieur pour l'actionnement manuel du pêne de blocage (13).

7. Poutre de chargement (1) selon la revendication 6, **caractérisée en ce que** la languette (18) dépasse toujours d'une surface extérieure du patin (4).

8. Poutre de chargement (1) selon l'une des revendications précédentes, **caractérisée en ce que** le levier de pivotement (11) comprend une première section (17) et une deuxième section (19) qui enferment un axe de pivotement (12), le pêne de blocage (13) étant disposé à la première section (17) et un élément élastique (21) étant attaché à la deuxième section (19) et configuré pour faire pivoter le levier de pivotement (11) afin de placer le pêne de blocage (13) dans la position de verrouillage.

9. Poutre de chargement (1) selon la revendication 8, **caractérisée en ce que** la première section (17) et la deuxième section (19) enferment, sur un côté orienté vers l'élément de poutre (2), un angle de moins de 180°.

10. Poutre de chargement (1) selon l'une des revendications précédentes, **caractérisée en ce que** le patin comprend deux parois de maintien (14) entre lesquelles le levier de pivotement (11) est monté.

11. Poutre de chargement (1) selon la revendication 10, **caractérisée en ce que** l'élément de poutre (2) comprend deux brides (15) espacées l'une de l'autre et qui entourent les parois de maintien (14), le boulon d'arrêt (16) s'étendant à travers les parois de maintien (14) est les brides (15).

12. Poutre de chargement (1) selon l'une des revendications précédentes, **caractérisée en ce qu'**une unité de freinage (23) est disposée sur le patin (4), qui engendre un effort de friction entre le patin (4) et le rail de support (6) afin d'empêcher un glissement du patin (4) lorsque le pêne de blocage (13) est dans sa position de déverrouillage.
